# EUROPEAN PATENT SPECIFICATION

(11) **EP 2 659 160 B1**
(45) Date of publication and mention of the grant of the patent: **24.04.2019**
(21) Application number: 11804653.1
(22) Date of filing: 30.12.2011
(51) Int. Cl.: F16G 5/16

(54) **TRANSVERSE ELEMENT FOR A DRIVE BELT FOR A CONTINUOUSLY VARIABLE TRANSMISSION HAVING TWO CONTACT SURFACE PARTS AT EITHER LATERAL SIDE THEREOF**
QUERELEMENT FÜR EINEN ANTRIEBSRIEMEN FÜR EIN STUFENLOSES GETRIEBE MIT ZWEI KONTAKTFLÄCHENTEILEN AN JEDER SEITE
ÉLÉMENT TRANSVERSAL DESTINÉ À UNE COURROIE DE TRANSMISSION POUR UNE TRANSMISSION À VARIATION CONTINUE DOTÉE DE DEUX PARTIES DE SURFACE DE CONTACT SUR L'UN DE SES CÔTÉS LATÉRAUX

(30) Priority: 30.12.2010 NL 1038486
(43) Date of publication of application: 06.11.2013
(73) Proprietor: Robert Bosch GmbH, 70442 Stuttgart (DE)
(72) Inventor: JONKERS, Joost, Johannes, Cornelis, NL-5126 BH Gilze (NL); VAN DER SLUIS, Francis, Maria, Antonius, NL-5271 HP Sint-Michielsgestel (NL); DE KUYPER, Dirk-Jan, NL-5000 AM Tilburg (NL); VAN DER VELDE, Arie, Gerrit, Issak, NL-5014 LW Tilburg (NL); DELADI, Elena, Loredana, NL-5508 MZ Veldhoven (NL); FARAON, Irinel, Cosmin, NL-5056 JL Berkel-Enschot (NL); HUPKES, Ingmarus, Geert, NL-5000 AM Tilburg (NL)
(74) Representative: Plevier, Gabriël Anton Johan Maria
(86) International application number: PCT/EP2011/006607
(87) International publication number: WO 2012/089346

(56) References cited:
- EP-A1- 1 672 245
- WO-A1-2011/062480
- JP-A- 2009 185 944

## Description

The present invention relates to a transverse element for a drive belt for a continuously variable transmission, which drive belt is destined to be arranged around two pulleys of the transmission and which drive belt comprises a number of such transverse elements for contacting the transmission pulleys, as well as an endless carrier for carrying these transverse elements, which carrier may comprise only one endless flexible metal band, but typically includes a number of such bands in a mutually nested relationship. The transverse elements are arranged along the circumference of the carrier, wherein they are able to transmit forces which are related to a movement of the drive belt. The present type of drive belt is also known as a push belt.

The present type of drive belt is known to be provided with a single endless carrier that is mounted in a central recess of the transverse elements that opens towards the radial outside of the belt. However, usually this type of drive belt includes two carriers that are mounted in two recesses of the transverse elements that each open towards a respective axial or lateral side of the transverse elements, i.e. of the belt. The present invention exclusively relates to this latter drive belt including two carriers.

The transverse elements of this drive belt have contact surfaces that are provided on either axial or lateral side of the transverse elements for engaging the transmission pulleys, i.e. a respective sheave thereof. The said contact surfaces are mutually diverging in radial outward direction and are located radially inward from the said recesses of the transverse element. The terms "top" and "bottom", which are hereinafter applied, are related to this direction of divergence; this is defined as being from bottom to top, i.e. radially outwards relative to the endless carrier.

From bottom to top, the transverse element successively comprises a base portion, a middle portion that is defined between the recesses of the transverse element and a top portion, wherein the dimensions of the middle portion are comparatively small. Normally, in the drive belt, the base portion is located at the side of the inner circumference, i.e. the radial inside, of the drive belt, whereas the top portion is located at the side of the outer circumference, i.e. the radial outside of the drive belt. The transverse element also has two main body surfaces which extend substantially parallel with respect to each other and separated over the thickness of the transverse element. A correct or at least preferred position of a transverse element in the drive belt is a position in which the main body surfaces are more or less perpendicular to the circumferential direction of the belt. At least a part of a first main body surface of the transverse element is destined to abut against at least a part of a second main body surface of an adjacent transverse element in the push belt, whereas at least a part of the second main body surface of the transverse element is destined to abut against at least a part of the first main body surface of another adjacent transverse element in the push belt.

The base portion comprises the contact surfaces of the transverse element that are typically provided with a surface relief for allowing a lubrication fluid applied to and during use of the transmission to be accommodated in and/or to be carried away from protruding parts of the relief. This surface relief thus serves to realize an effective friction contact between the transverse elements of the drive belt and the pulley sheaves, by preventing the formation of an oil film between the (protruding parts of the) contact surfaces of the transverse element and the pulley sheaves. The surface relief is often in the form of a pattern of alternating protruding parts and recessed parts, in particular ribs and grooves, extending over the thickness of the transverse element in a mutually substantially parallel arrangement.

The surface area required for the contact surfaces depends on many parameters of the transmission. Most notably in this respect, is the normal or clamping force pressure that is exerted by the pulley sheaves on the drive belt during use, but of course also the configuration of the surface relief, respective material and surface finishes play a role therein, as well as the required service life of the, in particular, the drive belt. From the perspective of drive belt design, such surface area of the contact surfaces can in particular be influenced by changing the radial or height dimension thereof. For example the European patent publication EP-A-0 962 679 a/o relates to this latter design parameter and seeks to minimize such height of the contact surfaces of the transverse elements.

The main advantage of the above known drive belt design, which operates with a comparatively high contact pressure in the friction contact between the pulleys and the belt, is that it enables an efficient power transfer, at least in comparison with a transmission incorporating a drive belt with higher contact surfaces. In particular, a comparatively high coefficient of friction and comparatively low slip losses can be realized thereby. However, at the same time, it was established to be a disadvantage of the above known belt design that the orientation of the transverse elements thereof can deviate from a preferred radial alignment when clamped between the pulley sheaves ("pitching rotation of the transverse element") relatively. At least, a resistance against such a pitching rotation decreases with a decreasing height of the contact surfaces. In other words, in the above known belt design, the (orientation of the) transverse elements will be less stable and, once pitched relative to the preferred radial orientation thereof, the contact surfaces engage the pulley sheaves effectively and disadvantageously in contact points only. As a result, wear of the drive belt and/or pulleys will increase and additional friction losses may occur.

The present invention aims to approach the power transfer efficiency (improvement) provided by the above known drive belt design, while at the same time largely avoiding the (additional) instability of the transverse element that is inherent to such known design.

According to the invention such aim is realized by incorporating the subject matter of the characterizing portion of claim 1 hereinafter in the design of the drive belt. Thus, according to the invention, the lateral sides of the transverse element each include two contact surface parts that are provided with a surface profile or relief for contacting the transmission pulleys, as well as a recessed, central part that is provided in between the said two contact surface parts.

Thus, rather than reducing the height of the base portion of the transverse element as a whole, each lateral side of the base part is provided with two contact surface parts that are defined by recessing a central part of the respective lateral side of the transverse elements relative to (a virtual straight line connecting) such contact surface parts thereof.

It is noted that both EP 1 672 245 A1 and JP 2009 185944 A disclose a transverse element whereof each lateral side of the base part thereof is provided with two contact portions. In these known designs of the transverse element the said contact portions are embodied by a single protrusion each, rather than by contact surface parts that are individually provided with a surface profile.

Preferably, in accordance with the present invention, the contact surface parts are respectively provided at the extreme ends, i.e. at the top and at the bottom, of the respective lateral side of the transverse element.

By the above measure according to the invention it is realized that the surface area of each contact surface, i.e. the combined surface area of the two parts thereof, is favorably small, i.e. is reduced relative to the known, continuously formed contact surface, whereas at the same time the height of the contact surface is favorably maintained, at least effectively in view of the pitching movement of the transverse element relative to the pulley sheaves. Indeed, by the above measure, a small pitching of the transverse element can even be accommodated with the invention, because the recessed central part does not (immediately) arrive into contact with the pulley sheaves as a result thereof.

Of course, when the pitch of the transverse element according to the invention becomes large, also the recessed central part of the lateral side of the transverse element can arrive into contact with the pulley sheaves. Therefore, in accordance with a further aspect of the invention, also the said recessed central part is provided with a surface relief.

According to the invention, the recessed central part of the lateral sides of the transverse element spans between one third and four fifths, preferably about half of the overall height thereof. The former range being established to substantially and jointly realize the above-mentioned favorable effects.

Further according to the invention, the recessed central part of the lateral sides of the transverse element is located either essentially halfway the height of the lateral sides of the transverse element or more toward the bottom thereof. This has the advantage that the forces exerted by the pulley sheaves are concentrated at or at least near the location of a so-called tilting line of the transverse elements that is typically located as close to the endless carriers as possible, at which tilting line the forces exerted between the transverse elements of the drive belt themselves are concentrated. Preferably, at most 80% of the total surface area of the two contact surface parts, i.e. of the remaining non-recessed parts of the lateral sides of the transverse element is located above the said the recessed central part, i.e. at least 20% thereof being located below the said recessed central part. More preferably, such distribution amounts to between 60 to 70% of the two contact surface parts being located above and 30 to 40% of the two contact surface parts being located below the recessed central part.

Within the scope of the present invention, it is possible to have a drive belt in which all transverse elements are provided with the said recessed central part of the lateral sides thereof. However, it is an option to include therein also conventional transverse elements with lateral sides that are formed as continuous contact surfaces. Combing different types of transverse elements in a single drive belt offers the advantage of noise reduction by less monotonic behavior of the interaction between the transverse elements and the pulleys. Such combination of different types may either be in a regular, alternating pattern of the different types or a random mixing of the different types to maximize the noise reduction.

The present invention will be explained on the basis of the following description of the invention with reference to the drawing, in which equal reference signs indicate equal or similar components, and in which:
figure 1 provides a schematic perspective view of the continuously variable transmission with a drive belt running over two pulleys,
figure 2 shows a cross section of the known drive belt viewed in the circumference direction thereof,
figure 3 provides a width-wise oriented view of a transverse element of the known drive belt,
figure 4 provides a close-up of the known transverse element of figure 2 schematically indicating a lateral side of a base part thereof that represents a contact surface with a surface relief for contacting the transmission pulleys,
figure 5 illustrates a first embodiment of the invention in a close-up corresponding to that of figure 4
figure 6 represent a graph of the measured power efficiency increase provided by the invention relative to the known drive belt, and
figure 7 illustrates a second embodiment of the invention in a close-up corresponding to those of figures 4 and 5.

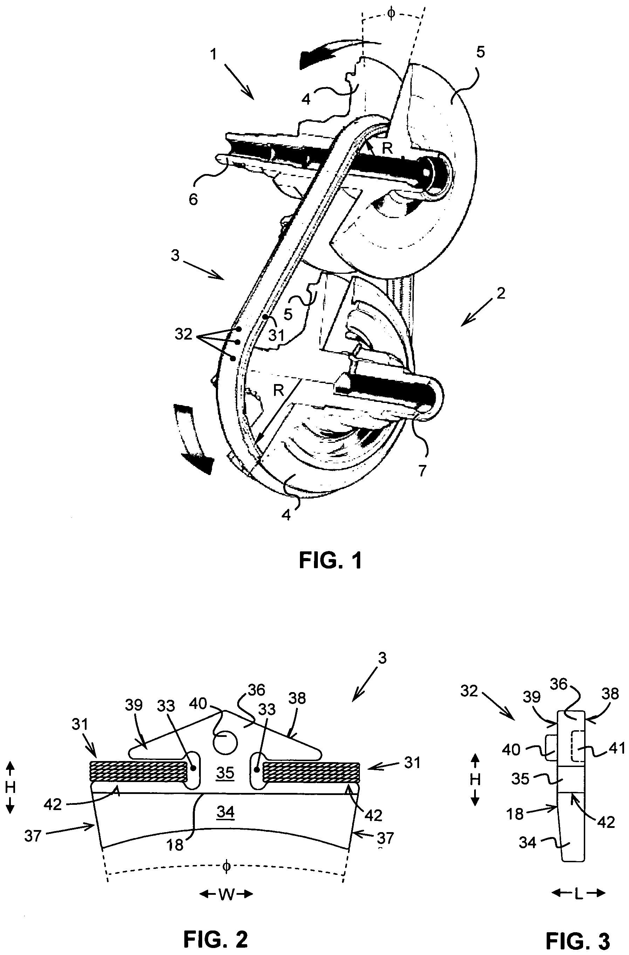

The schematic illustration of a continuously variable transmission in Figure 1 shows a drive belt 3 which runs over two pulleys 1, 2 and which includes a closed, i.e. endless carrier 31 and an essentially contiguous row of transverse elements 32 that are mounted on and arranged along the circumference of the carrier 31. In the illustrated position, the upper pulley 1 rotates more quickly than the lower pulley 2. By changing the distance between the two conical sheaves 4, 5 of each pulley 1, 2, the so-called running radius R of the drive belt 3 on the respective pulleys 1, 2 can be changed and, as a result, the rotational speed ratio i between the two pulleys 1,2 can be varied. This is a known manner of varying a difference in rotational speed between an input shaft 6 and an output shaft 7 of the transmission.

In Figure 2, the drive belt 3 is shown in a cross section thereof facing in the belt's circumference or length direction L, i.e. facing in a direction perpendicular to the axial width W and radial height H directions thereof. This figure shows the presence of two carriers 31 shown in cross-section that carry and guide the transverse elements 32 of the drive belt 3, whereof one transverse element 32 is shown in front elevation. The transverse elements 32 and the carriers 31 of the drive belt 3 are typically made of metal, usually steel. The transverse elements 32 are able to move, i.e. slide along the carriers 31 in the length direction L of the drive belt 3, so that when a force is transmitted between the transmission pulleys 1, 2, this force is transmitted by the transverse elements 32 pressing against one another and pushing each other forward in a direction of rotation of the drive belt 3 and the pulleys 1, 2.

The carriers 31 hold the drive belt 3 together and, in this particular exemplary embodiment, are composed of five individual endless bands each, which endless bands are mutually concentrically nested to form the carrier 31. In practice, the carriers 31 often comprise more than five endless bands, e.g. up to twelve or more.

The transverse element 32, which is also shown in side view in Figure 3, is provided with two cut-outs 33 located opposite one another and opening towards opposite sides of the transverse element 32. Each cut-out 33 accommodates a respective one of the two carriers 31. A first or base portion 34 of the transverse element 32 thus extending radially inwards from or, in height direction H, below the carriers 31, a second or middle portion 35 of the transverse element 32 being situated in between and at the same (radial) height of the carriers 31 and a third or top portion 36 of the transverse element 32 extending radially outwards or, in height direction H, above the carriers 31. The lower or radially inward side of a respective cut-out 33 is delimited by a so-called bearing surface 42 of the base portion 34 of the transverse element 32, which bearing surface 42 faces radially outwards or upwards in the general direction of the top portion 36.

A first or rear main body surface 38 of the transverse element 32 facing in the length direction L of the drive belt 3 is essentially flat, while a so-called rocking or tilting edge 18 is provided on an opposite facing, second or rear main body surface 39 of the transverse element 32. In height direction H above the rocking edge 18, the transverse element 32 in side view has an essentially constant thickness, whereas below the rocking edge 18, said base portion 34 tapers towards the bottom side of the transverse element 32. The rocking edge 18 is typically provided in the form of a slightly rounded section of the front main body surface 39 of the transverse element 32. In the drive belt 3, the front main body surface 39 of the transverse element 32 arrives in contact with the rear main body surface 38 of an adjacent transverse element 32 at the location of the rocking edge 18, both in the straight parts of the drive belt 3 stretching between the pulleys 1, 2 and in the curved parts thereof located in-between the conical pulley sheaves 4, 5 of the transmission pulleys 1, 2.

The transverse element 32 is also provided with a longitudinally protruding stud 40 on its front main body surface 39 and a hole 41 in its rear main body surface 38. The stud 40 and the hole 41 of two adjacent transverse elements 32 in the drive belt 3 are mutually engaging in the sense that the stud 40 of a first of the adjacent transverse elements 32 is at least partly inserted in the hole 41 of a second one thereof. Hereby, a relative displacement between and/or rotation of the said two adjacent transverse elements 32 is limited to a clearance provided between the said stud 40 and hole 41.

The lateral sides of the said base portion 34 of the transverse element 32 that form contact surfaces 37 for contacting the pulley sheaves 4, 5 are oriented at an angle φ with respect to one another, which angle φ corresponds, at least predominantly, to a V-angle φ defined between the conical discs 4, 5 of the transmission pulleys 1, 2 (see Figure 1).

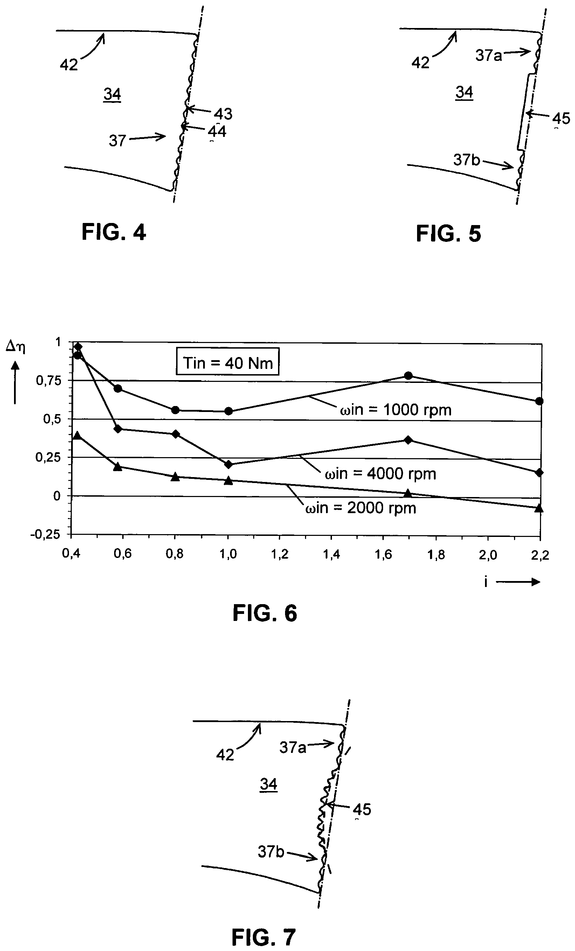

In figure 4 one such lateral side and contact surface 37 is schematically illustrated in a close-up thereof that reveals the presence of a surface relief. The known surface covers essentially the whole of the contact surface 37 and is formed by alternating ridges/ribs 43 and valleys/grooves 44 that extend in the (local) belt's length direction L in a mutually parallel arrangement between the front main body surface 39 and the rear main body surface 38. Note that in practice the scale of the surface relief is much finer than what is indicated in figure 4 (and figures 5 and 7) for the sake of illustration. In practice, the profile of the surface relief typically has a depth of 10 to 30 micron and includes 5 to 10 grooves 44 and ridges 43 per millimeter height of the contact surface 37, which contact surface 37 itself is much smaller than what is indicated in figure 4 (and figures 5 and 7), namely between 4 and 8 millimeters.

According to the invention and as illustrated in figure 5 in a close-up similar to figure 4, the contact surface 37 is provided in two separate parts 37a, 37b that are mutually separated in the height direction by a central part 45 of the respective lateral side of the transverse element 32 that is recessed relative to a virtual plane defined by the tops of the ribs 43 of the surface relief (represented in cross-section by the dash-dotted line). By this technical measure, i.e. by splitting the known, continuously formed contact surface 37 into two, mutually separated contact surface parts 37a, 37b, power loss associated with the frictional force transverse between the drive belt 3 and the transmission pulleys 1, 2 was found to be reduced and the efficiency of the power transfer to be increased.

According to the invention, the recessed central part of the lateral sides of the transverse element is recessed to a distance or depth relative to the (crest of the) protruding parts of the surface relief that is at least equal to, but preferably, up to about 0.5 mm at most, larger than the depth of the (bottom of the) recessed parts.

In figure 6 the advantageous effect of the invention is graphically illustrated by way of a graph of the efficiency increase Δη measured with the drive belt 3 in accordance with the invention relative to the known drive belt 3. The graph provides the measured efficiency increase Δη in relation to the transmission speed ratio i for three rotational speed ω in settings of the input shaft 6 and with a torque Tin of 40 Nm exerted on the input shaft 6.

In figure 7 a second embodiment of the invention is illustrated, in which second embodiment not only the said contact surface parts 37a, 37b are provided with the surface relief but also the recessed central part 45 of the respective lateral side of the transverse element 32. In this particular embodiment, the tops of the ribs 43 of the surface relief of the recessed central part 45 form a (virtual) concave contour (represented by the dashed line). This latter feature provides for a favorable contact between the transverse element 32 and the pulley sheaves 4, 5 even if the transverse element 32 pitches to such an extent that the recessed central part 45 arrives into contact with a pulley sheave 4, 5.

It will be clear to a person skilled in the art that the scope of the present invention is not limited to the examples discussed above, but that several amendments and modification thereof are possible without deviating from the scope of the invention as defined in the appended claims.

## Claims

1. Drive belt (3) with two endless carriers (31) and a number of transverse elements (32) that are mounted on the carriers (31), which transverse elements (32) are each provided with two main body surfaces (38, 39), where between the transverse element (32) extends in thickness direction, with a base portion (34) located radially inward from the carriers (31), with a middle portion (35) located in between the carriers (31) and with a top portion (36) located radial outward from the carriers (31), whereof the base portion (34) is provided with a profiled contact surface (37) on both lateral sides thereof that is intended for engaging a pulley (1, 2) of a continuously variable transmission, which contact surface (37) is provided in two separate parts (37a, 37b) that are mutually separated by a central part (45) of the respective lateral side of the transverse element (32), which central part (45) is recessed relative to a virtual straight line that connects the two separate parts (37a, 37b) of the contact surface (37), which virtual straight line neither touches, nor intersects such central part (45), and which central part (45) extends over at least one third and at most four fifths of the respective lateral side of the transverse element (32) and is located radially halfway the base portion (35) or more towards the radial inside thereof, **characterized in that**, the two separate parts (37a, 37b) of the contact surface (37) are formed by a series of alternating ribs (43) and grooves (44) that extend in a direction predominantly perpendicular to a main body surface (38, 39) of the transverse element (32).

2. Drive belt (3) according to the claim 1, **characterized in that**, the central part (45) is provided with a profiled surface.

3. Drive belt (3) according to the claim 1 or 2, **characterized in that**, the central part (45) is defined according to a predominantly concave contour.

4. Drive belt (3) according to one of the preceding claims, **characterized in that**, at most 80% of a total surface area of the two separate parts (37a, 37b) of the contact surface (37) is located above the said the recessed central part, with at least 20% thereof being located below the said recessed, central part (45).

5. Drive belt (3) according to one of the preceding claims, **characterized in that**, between 60 to 70% of a total surface area of the two separate parts (37a, 37b) of the contact surface (37) is located above the said the recessed, central part (45), with between 40 to 30% thereof being located below the said recessed, central part (45).

6. Continuously variable transmission with two pulleys (1, 2) and a drive belt (3) according to one of the preceding claims.

## Patentansprüche

1. Antriebsriemen (3) mit zwei Endlosträgern (31) und mehreren Querelementen (32), die auf den Trägern (31) angebracht sind, wobei die Querelemente (32) jeweils mit zwei Hauptkörperflächen (38, 39), zwischen denen sich das Querelement (32) in der Dickenrichtung erstreckt, mit einem Basisabschnitt (34), der sich radial einwärts von den Trägern (31) befindet, mit einem mittleren Abschnitt (35), der sich zwischen den Trägern (31) befindet, und mit einem oberen Abschnitt (36), der sich radial außerhalb der Träger (31) befindet, versehen sind, wobei der Basisabschnitt (34) auf beiden lateralen Seiten davon mit einer mit einem Profil versehenen Kontaktfläche (37) versehen ist, die eine Riemenscheibe (1, 2) eines stufenlosen Getriebes in Eingriff nehmen soll, wobei die Kontaktfläche (37) in zwei getrennten Teilen (37a, 37b), die durch einen zentralen Teil (45) der jeweiligen lateralen Seite des Querelements (32) getrennt sind, bereitgestellt wird, wobei der zentrale Teil (45) bezüglich einer gedachten Geraden, die die beiden getrennten Teile (37a, 37b) der Kontaktfläche (37) verbindet, ausgenommen ist, wobei die Gerade einen solchen zentralen Teil (45) weder berührt noch schneidet, und wobei sich der zentrale Teil (45) über mindestens ein Drittel und höchstens vier Fünftel der jeweiligen lateralen Seite des Querelements (32) erstreckt und sich radial in der Mitte des Basisabschnitts (35) oder weiter zur radialen Innenseite davon befindet, **dadurch gekennzeichnet, dass** die beiden getrennten Teile (37a, 37b) der Kontaktfläche (37) durch eine Reihe von abwechselnden Rippen (43) und Nuten (44) gebildet werden, die sich in einer überwiegend senkrecht zu einer Hauptkörperfläche (38, 39) des Querelements (32) verlaufenden Richtung erstrecken.

2. Antriebsriemen (3) nach Anspruch 1, **dadurch gekennzeichnet, dass** der zentrale Teil (45) mit einer mit einem Profil versehenen Fläche versehen ist.

3. Antriebsriemen (3) nach Anspruch 1 oder 2, **dadurch gekennzeichnet, dass** der zentrale Teil (45) gemäß einer überwiegend konkaven Kontur definiert ist.

4. Antriebsriemen (3) nach einem der vorhergehenden Ansprüche, **dadurch gekennzeichnet, dass** sich mindestens 80% einer Gesamtoberfläche der beiden getrennten Teile (37a, 37b) der Kontaktfläche (37) über dem ausgenommenen zentralen Teil befinden, wobei sich mindestens 20% davon unter dem ausgesparten, zentralen Teil (45) befinden.

5. Antriebsriemen (3) nach einem der vorhergehenden Ansprüche, **dadurch gekennzeichnet, dass** sich zwischen 60 und 70% der Gesamtoberfläche der beiden getrennten Teile (37a, 37b) der Kontaktfläche (37) über dem ausgesparten, zentralen Teil (45) befinden, wobei sich zwischen 40 und 30% davon unter dem ausgesparten, zentralen Teil (45) befinden.

6. Stufenloses Getriebe mit zwei Riemenscheiben (1, 2) und einem Antriebsriemen (3) nach einem der vorhergehenden Ansprüche.

## Revendications

1. Courroie d'entraînement (3) avec deux supports sans fin (31) et un certain nombre d'éléments transversaux (32) qui sont montés sur les supports (31), lesquels éléments transversaux (32) sont chacun pourvus de deux surfaces de corps principales (38, 39), entre lesquelles l'élément transversal (32) s'étend dans la direction de l'épaisseur, avec une portion de base (34) située radialement vers l'intérieur par rapport aux supports (31), avec une portion centrale (35) située entre les supports (31) et avec une portion supérieure (36) située radialement vers l'extérieur par rapport aux supports (31), parmi lesquelles la portion de base (34) est pourvue d'une surface de contact profilée (37) sur ses deux côtés latéraux, laquelle est prévue pour venir en prise avec une poulie (1, 2) d'une transmission à variation continue, laquelle surface de contact (37) est prévue sous forme de deux parties séparées (37a, 37b) qui sont séparées l'une de l'autre par une partie centrale (45) du côté latéral respectif de l'élément transversal (32), laquelle partie centrale (45) est en retrait par rapport à une ligne droite virtuelle qui relie les deux parties séparées (37a, 37b) de la surface de contact (37), laquelle ligne droite virtuelle ne touche pas et ne coupe pas ladite partie centrale (45), et laquelle partie centrale (45) s'étend sur au moins un tiers et au maximum sur quatre cinquièmes du côté latéral respectif de l'élément transversal (32) et est située radialement à mi-chemin de la portion de base (35) ou plus radialement vers l'intérieur de celle-ci, **caractérisée en ce que** les deux parties séparées (37a, 37b) de la surface de contact (37) sont formées par une série de nervures (43) et de rainures (44) en alternance qui s'étendent dans une direction principalement perpendiculaire à une surface de corps principale (38, 39) de l'élément transversal (32).

2. Courroie d'entraînement (3) selon la revendication 1, **caractérisée en ce que** la partie centrale (45) est pourvue d'une surface profilée.

3. Courroie d'entraînement (3) selon la revendication 1 ou 2, **caractérisée en ce que** la partie centrale (45) est définie avec un contour principalement concave.

4. Courroie d'entraînement (3) selon l'une des revendications précédentes, **caractérisée en ce qu'**au maximum 80 % d'une superficie totale des deux parties séparées (37a, 37b) de la surface de contact (37) sont situés au-dessus de ladite partie centrale en retrait, avec au moins 20 % de celle-ci étant située en dessous de ladite partie centrale en retrait (45).

5. Courroie d'entraînement (3) selon l'une des revendications précédentes, **caractérisée en ce qu'**entre 60 et 70 % d'une superficie totale des deux parties séparées (37a, 37b) de la surface de contact (37) sont situés au-dessus de ladite partie centrale en retrait (45), avec 40 à 30 % de celle-ci étant situés en dessous de ladite partie centrale en retrait (45).

6. Transmission à variation continue comprenant deux poulies (1, 2) et une courroie d'entraînement (3) selon l'une des revendications précédentes.
